# EUROPÄISCHE PATENTSCHRIFT

(11) **EP 2 142 344 B1**
(45) Veröffentlichungstag und Bekanntmachung des Hinweises auf die Patenterteilung: **09.04.2014**
(21) Anmeldenummer: 08708788.8
(22) Anmeldetag: 07.02.2008
(51) Int. Cl.: F16C 35/02, B25F 5/02

(54) **HANDWERKZEUGMASCHINE**
HAND MACHINE TOOL
MACHINE-OUTIL PORTATIVE

(30) Priorität: 28.03.2007 DE 102007014758
(43) Veröffentlichungstag der Anmeldung: 13.01.2010
(73) Patentinhaber: Robert Bosch GmbH, 70442 Stuttgart (DE)
(72) Erfinder: BERNHARDT, Thomas, 72631 Aichtal-Groetzingen (DE); RUEBSAAMEN, Holger, 70188 Stuttgart (DE); SCHLEGEL, Andreas, 70771 Leinfelden-Echterdingen (DE)
(86) Internationale Anmeldenummer: PCT/EP2008/051508
(87) Internationale Veröffentlichungsnummer: WO 2008/116690

(56) Entgegenhaltungen:
- DE-A1-102004 036 585
- US-A- 4 098 351

## Beschreibung

### Stand der Technik

Die Erfindung geht aus von einer Handwerkzeugmaschine mit einem Zwischenflansch, insbesondere zur Aufnahme von Getriebeelementen, nach dem Oberbegriff des Anspruchs 1.

Aus der DE 10 2004 036 585 A1 ist eine Handwerkzeugmaschine mit einem Zwischenflansch zur Lagerung von Getriebeelementen bekannt, welcher mehrere Grundkörper mit Lagerstellen aufweist. Der Zwischenflansch dient zur Aufnahme eines Antriebskolbens, einer Motorwelle und einer Zwischenwelle, wobei der Zwischenflansch aus Festigkeitsgründen eine gitterförmige Stützkonstruktion aufweisen kann.

Eine Handwerkzeugmaschine mit einem Zwischenflansch gemäß dem Oberbegriff des Anspruchs 1 ist auch von EP-0564217-A1 bekannt.

### Vorteile der Erfindung

Die Erfindung geht aus von einer Handwerkzeugmaschine mit einem Zwischenflansch, insbesondere zur Aufnahme von Getriebeelementen, welcher mindestens einen Grundkörper mit mindestens einer Lagerstelle aufweist.

Es wird vorgeschlagen, dass mindestens eine Öffnung zumindest im Bereich der Lagerstelle angeordnet ist. Unter "zumindest im Bereich der Lagerstelle" soll insbesondere verstanden werden, dass die Öffnung auch über die Lagerstelle hinaus im Grundkörper weiter verlaufen kann. Hierdurch wird eine Vereinfachung bei der Montage und der Demontage der Getriebeelemente der Handwerkzeugmaschine erzielt. Der Zwischenflansch ist vorzugsweise als Teil einer Getriebeeinheit der Handwerkzeugmaschine ausgebildet, wobei er beispielsweise zur Aufnahme drehbarer und/oder translatorisch bewegbarer bzw. antreibbarer Elemente, wie beispielsweise einer Motorwelle, eines Hammerrohrs, einer Zwischenwelle, eines Antriebskolbens usw., und/oder zur Aufnahme von weiteren Teilen, in denen diese Elemente aufgenommen bzw. durchgeführt sind, wie beispielsweise einem Lager, einem Hammerrohr usw., vorgesehen ist. Der Zwischenflansch kann außerdem jedoch als Teil einer weiteren Einheit der Handwerkzeugmaschine, wie beispielsweise einer Motoreinheit, ausgebildet sein und/oder als Befestigungsflansch zwischen zwei Einheiten der Handwerkzeugmaschine ausgeführt werden, wie beispielsweise zwischen einer Motoreinheit und einer Getriebeeinheit. Der Zwischenflansch kann zusätzlich dazu dienen, von Getriebeelementen und/oder Motorelementen ausgehende Kräfte und/oder eine von Getriebeelementen bzw. Motorelementen ausgehende Wärme aufzunehmen und abzuleiten, was sich insbesondere für den Einsatz in Handwerkzeugmaschinen mit einem aus Kunststoff hergestellten Gehäuse eignet. Im vorliegenden Ausführungsbeispiel dient der Zwischenflansch vorzugsweise zur Aufnahme eines in der Lagerstelle gelagerten Hammerrohrs, einer Zwischenwelle und einer Motorwelle. Die Zwischenwelle ist von der Motorwelle über ein Getriebe antreibbar. Auf die Zwischenwelle ist ein Taumellager aufgesteckt, welches über einen Taumelfinger eine Umwandlung einer Drehbewegung der Zwischenwelle in eine hin- und hergehende Bewegung eines Antriebskolbens in dem Hammerrohr bewirkt.

Die Montage bzw. das Einführen des Taumelfingers in den Antriebskolben erfolgte bisher durch seitliches Einführen des Taumelfingers durch eine Ausnehmung des Grundkörpers in den Antriebskolben sowie ein Drehen der Zwischenwelle um 90°. Erfindungsgemäß ist mindestens eine schlitzförmige Öffnung zumindest im Bereich der Lagerstelle angeordnet. Vorteilhafterweise verläuft die Öffnung über die Lagerstelle hinaus im Grundkörper weiter. Im vorliegenden Ausführungsbeispiel ist in dieser Lagerstelle das Hammerrohr aufgenommen. Aufgrund dieser Ausgestaltung kann der Antriebskolben schon vorab auf den Taumelfinger aufgesteckt und zusammen mit der das Taumellager aufweisenden Zwischenwelle in den im Grundkörper und in der Lagerstelle verlaufende Öffnung eingeführt werden, wobei die Montagerichtung der Richtung der Grundkörperlängsachse entspricht, d.h. die Zwischenwellenbaugruppe kann vorzugsweise axial montiert werden. Da das seitliche Einführen des Taumelfingers und das Drehen der Zwischenwelle entfällt, wird eine besonders einfache Montage bzw. Demontage der Getriebeelemente ermöglicht. Ferner besteht ein geringerer Platzbedarf bei der Montage, da die Getriebeelemente axial in den im Grundkörper und in der Lagerstelle verlaufende Öffnung einführbar sind.

In einer weiteren Ausgestaltung weist die Handwerkzeugmaschine ein Lager auf, welches in der Lagerstelle aufgenommen und mindestens im Bereich der Öffnung der Lagerstelle geöffnet bzw. ebenfalls geschlitzt sein kann. Vorteilhafterweise kann hierdurch das Lager vor der Montage der Getriebeelemente in die Lagerstelle eingebracht werden. Bei der Montage kann dann der Taumelfinger axial in die im Grundkörper, in der Lagerstelle und im Lager verlaufende Öffnung eingeführt werden.

Vorteilhafterweise ist das Lager mittels mindestens einer Einrichtung in der Lagerstelle gegen Verdrehen und/oder gegen axiales Verschieben gesichert, wodurch der Einsatz eines einfachen, kostengünstigen Gleitlagers möglich ist.

Es wird vorgeschlagen, dass der Zwischenflansch als separates Bauteil ausgebildet ist, wodurch eine hohe Flexibilität in der Ausgestaltung des Zwischenflansches erreicht werden kann.

In einer Ausführungsvariante wird vorgeschlagen, dass der Zwischenflansch mindestens teilweise in ein Gehäuse der Handwerkzeugmaschine integriert ist, d.h. mindestens teilweise als Gehäuseelement ausgebildet ist. Hierdurch wird ein geringerer Herstellaufwand erreicht, indem das Gehäuse und der Zwischenflansch mindestens teilweise einstückig hergestellt werden.

Eine weitere vorteilhafte Reduktion des Herstellaufwands kann dadurch erzielt werden, indem der Zwischenflansch und insbesondere der erste Grundkörper mindestens teilweise aus zwei Halbschalen besteht. Hierdurch wird bei der Montage der Handwerkzeugmaschine ein einfaches Einlegen des Lagers für das Hammerrohr ermöglicht.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen Bohrhammer mit einem Zwischenflansch, welcher eine Grundkörpereinheit aufweist,
- Fig. 2: den Zwischenflansch aus Fig. 1 in einer perspektivischen Darstellung mit einem Grundkörper der Grundkörpereinheit, welcher eine erfindungsgemäße Lagerstelle aufweist, und
- Fig. 3: den Zwischenflansch aus den Fig. 1 und 2, bei welchem eine Zwischenwellenbaugruppe montiert wird.

### Beschreibung der Ausführungsbeispiele

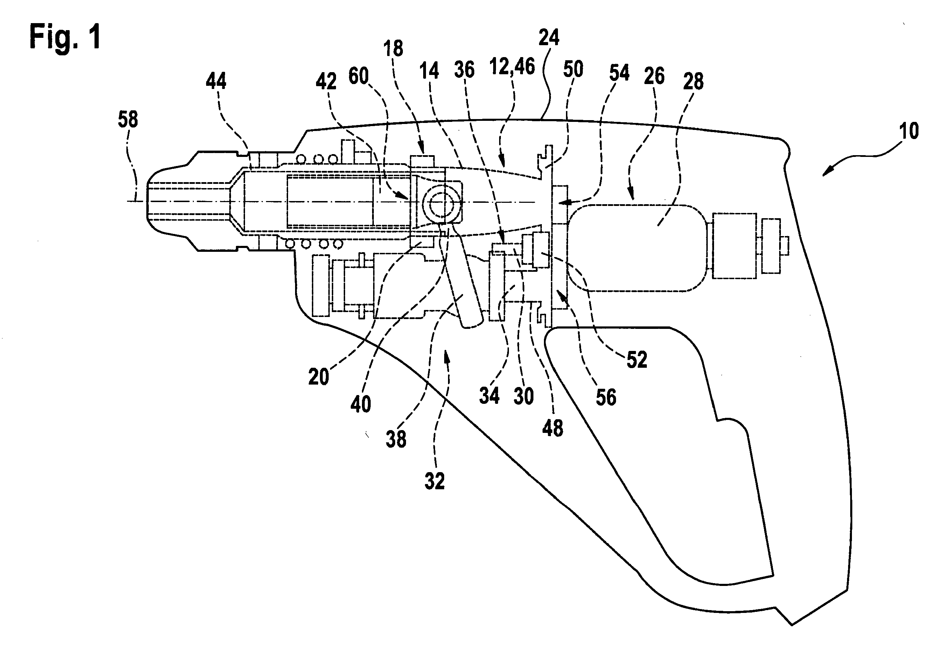

Fig. 1 zeigt eine als Bohrhammer 10 ausgebildete Handwerkzeugmaschine. Diese umfasst eine Motoreinheit 26 mit einer von einem elektrischen Motor 28 antreibbaren Motorwelle 30, eine Zwischenwellenbaugruppe 32 mit einer Zwischenwelle 34, die von der Motorwelle 30 über ein Getriebe 36 antreibbar ist, und einem auf die Zwischenwelle 34 aufgesteckten Taumellager, vorzugsweise Kugellager 38, welches über einen Taumelfinger 40 eine Umwandlung einer Drehbewegung der Zwischenwelle 34 in eine hin- und hergehende Bewegung eines Antriebskolbens 42 in einem Hammerrohr 44 bewirkt.

Ebenfalls dargestellt ist ein insbesondere zur Aufnahme von Getriebeelementen bestimmter Zwischenflansch 12, in welchem das Hammerrohr 44, die Zwischenwelle 34 und die Motorwelle 30 gelagert sind bzw. über welchen Lagerkräfte des Hammerrohrs 44, der Zwischenwelle 34 und der Motorwelle 30 in einem vorzugsweise aus Kunststoff hergestellten Gehäuse 24 des Bohrhammers 10 abgestützt werden.

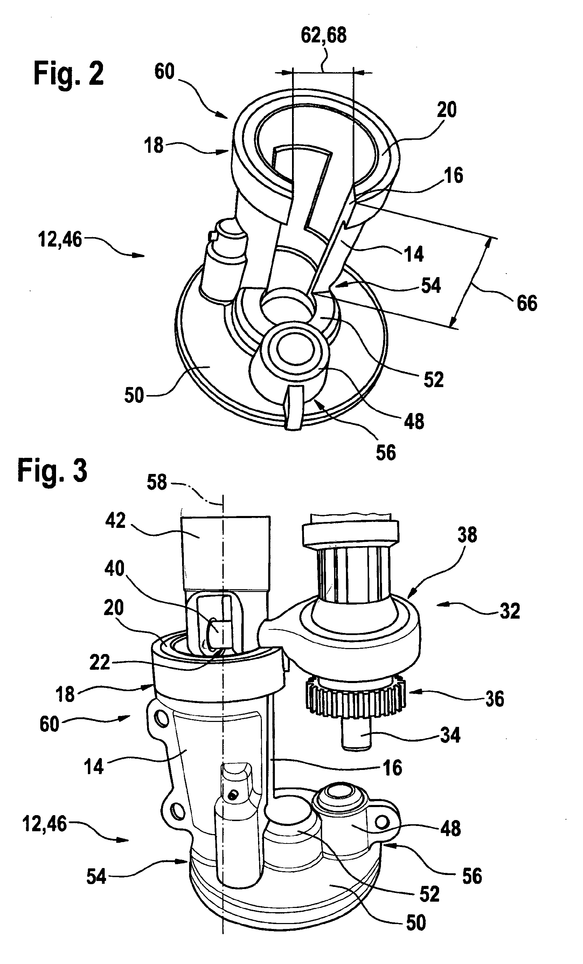

In Fig. 2 ist der Zwischenflansch 12 in einer perspektivischen Darstellung näher offenbart. Dieser besteht aus einer Grundkörpereinheit 46, die einen ersten hülsenförmigen Grundkörper 14, einen zweiten hülsenförmigen Grundkörper 48 und einen dritten, im Wesentlichen scheibenförmigen Grundkörper 50 mit einem angeformten hülsenförmigen Fortsatz 52 umfasst, wobei die beiden hülsenförmigen Grundkörper 14, 48 an ihren ersten Enden 54, 56 mit dem dritten Grundkörper 50 verbunden sind.

Im vorliegenden Ausführungsbeispiel ist der Zwischenflansch 12 einstückig ausgebildet. Es ist jedoch auch vorstellbar, dass es sich bei den oben aufgeführten Elementen 14, 48, 50, 52 um separate Bauteile handelt, welche beispielsweise mittels Schweißen miteinander verbunden werden. Alternativ sind jedoch auch andere, dem Fachmann als sinnvoll erscheinende Verbindungen denkbar, wie z.B. Lötverbindungen, Nietverbindungen, Klebeverbindungen usw.

Der erste Grundkörper 14 weist an seinem zweiten Ende 60 eine Lagerstelle 18 zur Aufnahme des Hammerrohrs 44 auf, wobei die Lagerstelle 18 vorzugsweise einstückig mit dem Grundkörper 14 ausgebildet ist. Alternativ hierzu kann es sich bei der Lagerstelle 18 auch um ein separates Bauteil handeln, welches mit dem Grundkörper 14 verbunden ist.

Zur Verbesserung der Montage der Handwerkzeugmaschine, ist erfindungsgemäß mindestens eine schlitzförmige Öffnung 16 zumindest im Bereich der Lagerstelle 18 angeordnet. Im vorliegenden Ausführungsbeispiel verläuft die Öffnung 16 über die Lagerstelle 18 hinaus weiter im Grundkörper 14, wobei die Öffnung 16 vorteilhafterweise in einem Bereich des ersten Endes 54 des ersten Grundkörpers 14 endet. Idealerweise verläuft die Öffnung 16 in Richtung einer Längsachse 58 des Grundkörpers 14, wobei die sich in Umfangsrichtung erstreckende Breite 62 der Öffnung 16 sich über die in Richtung der Längsachse 58 erstreckende Länge 66 ändern kann. Hierdurch weist der Grundkörper 14 eine im Wesentlichen über die gesamte Längsachse 58 des Grundkörpers 14 verlaufende Öffnung 16 auf, welche oben d.h. an einem zweiten Ende 60 des Grundkörpers 14 geöffnet ist, wobei die Länge 66 der Öffnung 16 abhängig von der Ausgestaltung der Zwischenwellenbaugruppe 32 ist. Zusätzlich können weitere Öffnungen in der Lagerstelle 18 und/oder im Grundkörper 14 vorgesehen sein.

Die Lagerstelle 18 dient zur Aufnahme eines Lagers 20, insbesondere eines Gleitlagers, welches ebenfalls mindestens im Bereich der Öffnung 16 der Lagerstelle 18 geöffnet bzw. geschlitzt ist, wobei auch hier die Öffnung des Lagers 20 an weiteren Stellen denkbar ist. Auch hier muss die Breite 68 der Öffnung im Lager 20 in Umfangsrichtung nicht der Breite 62 der Öffnung 16 im Grundkörper 14 in Umfangsrichtung entsprechen, wobei im vorliegenden Ausführungsbeispiel die Breiten 62 und 68 einander entsprechen. Im vorliegenden Ausführungsbeispiel ist ein Gleitlager 20 vorgesehen, welches mittels mindestens einer, hier nicht sichtbaren Einrichtung in der Lagerstelle 18 gegen Verdrehen gesichert ist. Bei der Einrichtung gegen Verdrehen kann es sich beispielsweise um Zapfen handeln, wobei auch weitere, dem Fachmann als sinnvoll erscheinende Einrichtungen denkbar sind. Zusätzlich ist das Lager 20 mittels mindestens einer Einrichtung 22 in der Lagerstelle 18 gegen axiales Verschieben gesichert. Bei der Einrichtung 22 gegen axiales Verschieben handelt es sich beispielsweise um Schrauben oder um Nasen am Grundkörper 14, welche nach der Montage des Lagers 20 umgebogen werden, wobei auch hier jede weitere sinnvolle Lösung denkbar ist. Vorzugsweise kann eine radiale Fixierung über z.B. eine Verstemmung erreicht werden.

Im vorliegenden Ausführungsbeispiel ist der Zwischenflansch 12 als separates Bauteil ausgebildet. Hierzu kann der Zwischenflansch 12 innerhalb des Gehäuses 24 der Handwerkzeugmaschine 10 angeordnet sein, wobei er z.B. an einer Gehäuseschale ringförmig anliegt. Um eine hohe Tragfähigkeit des Zwischenflansches 12 zu erreichen und diesen dennoch möglichst kostengünstig ausführen zu können, ist der Zwischenflansch 12 vorzugsweise aus Aluminium hergestellt.

Alternativ hierzu kann der Zwischenflansch 12 aber auch mindestens teilweise in das Gehäuse 24 der Handwerkzeugmaschine 10 integriert sein bzw. als Gehäuseelement ausgebildet sein. Vorteilhafterweise kann der Zwischenflansch 12 mindestens teilweise aus zwei Halbschalen bestehen.

Zur Montage der Getriebeelemente 30, 34, 44 gemäß Fig. 3 kann der Antriebskolben 42 schon vorab auf den Taumelfinger 40 aufgesteckt und zusammen mit der Zwischenwellenbaugruppe 32 in den im Grundkörper 14, in der Lagerstelle 18 und im Lager 20 verlaufende Öffnung 16 eingeführt werden, wobei die Montagerichtung der Richtung der Grundkörperlängsachse 58 entspricht. Anschließend wird die Zwischenwelle 34 in den zweiten Grundkörper 48 eingesteckt.

## Patentansprüche

1. Handwerkzeugmaschine (10) mit einem Zwischenflansch (12), insbesondere zur Aufnahme von Getriebeelementen, welcher mindestens einen Grundkörper (14) mit mindestens einer Lagerstelle (18) aufweist, **dadurch gekennzeichnet, dass** mindestens eine schlitzförmige Öffnung (16) zumindest im Bereich der Lagerstelle (18) angeordnet ist.

2. Handwerkzeugmaschine nach Anspruch 1, **gekennzeichnet durch** ein Lager (20), welches in der Lagerstelle (18) aufgenommen und mindestens im Bereich der Öffnung (16) geöffnet ist.

3. Handwerkzeugmaschine nach Anspruch 2, **dadurch gekennzeichnet, dass** das Lager (20) mittels mindestens einer Einrichtung in der Lagerstelle (18) gegen Verdrehen gesichert ist.

4. Handwerkzeugmaschine nach Anspruch 2 oder 3, **dadurch gekennzeichnet, dass** das Lager (20) mittels mindestens einer Einrichtung (22) in der Lagerstelle (18) gegen axiales Verschieben gesichert ist.

5. Handwerkzeugmaschine nach einem der vorhergehenden Ansprüche, **dadurch gekennzeichnet, dass** der Zwischenflansch (12) als separates Bauteil ausgebildet ist.

6. Handwerkzeugmaschine nach einem der Ansprüche 1 bis 4, **dadurch gekennzeichnet, dass** der Zwischenflansch (12) mindestens teilweise in ein Gehäuse (24) der Handwerkzeugmaschine (10) integriert ist.

7. Handwerkzeugmaschine nach einem der vorhergehenden Ansprüche, **dadurch gekennzeichnet, dass** der Zwischenflansch (12) mindestens teilweise aus zwei Halbschalen besteht.

8. Handwerkzeugmaschine nach einem der vorhergehenden Ansprüche, **dadurch gekennzeichnet, dass** der Grundkörper (14) hülsenförmig ist.

9. Handwerkzeugmaschine nach Anspruch 8, **dadurch gekennzeichnet, dass** der Zwischenflansch einen zweiten hülsenförmigen Grundkörper (48) und einen dritten, scheibenförmigen Grundkörper (50) mit einem angeformten hülsenförmigen Fortsatz (52) umfasst, wobei die beiden hülsenförmigen Grundkörper (14, 48) an ihren ersten Enden (54, 56) mit dem dritten Grundkörper verbunden sind.

10. Handwerkzeugmaschine nach einem der vorhergehenden Ansprüche, **dadurch gekennzeichnet, dass** es sich bei der Handwerkzeugmaschine um einen Bohrhammer (10) handelt.

11. Montageverfahren für eine Handwerkzeugmaschine, welche einen zumindest einen Grundkörper (14) mit einer schlitzförmigen, in einer Lagerstelle (18) und einem Lager (20) verlaufenden Öffnung (16) aufweisenden Zwischenf lansch (12), eine Zwischenwellenbaugruppe (32) mit einer Zwischenwelle (34) und einem einen Taumelfinger (40) aufweisenden Taumellager (38) sowie einen Antriebskolben (42)aufweist, **dadurch gekennzeichnet, dass** in einem ersten Schritt der Antriebskolben (42) auf den Taumelfinger (40) aufgesteckt und in einem zweiten Schritt zusammen mit der Zwischenwellenbaugruppe (32) in die Öffnung 16 eingeführt werden, wobei eine Montagerichtung einer Richtung einer Grundkörperlängsachse 58 des Grundkörpers 14 entspricht, bevor anschließend in einem dritten Schritt die Zwischenwelle 34 in einen zweiten Grundkörper 48 des Zwischenflansches (12) eingesteckt wird.

## Claims

1. Hand machine tool (10) with an intermediate flange (12), in particular for the accommodating of gearing elements, said intermediate flange having at least one main body (14) with at least one bearing point (18), **characterized in that** at least one slot-shaped opening (16) is arranged at least in the region of the bearing point (18).

2. Hand machine tool according to Claim 1, **characterized by** a bearing (20) which is accommodated in the bearing point (18) and is open at least in the region of the opening (16).

3. Hand machine tool according to Claim 2, **characterized in that** the bearing (20) is secured against rotation in the bearing point (18) by means of at least one device.

4. Hand machine tool according to Claim 2 or 3, **characterized in that** the bearing (20) is secured against axial displacement in the bearing point (18) by means of at least one device (22).

5. Hand machine tool according to one of the preceding claims, **characterized in that** the intermediate flange (12) is designed as a separate component.

6. Hand machine tool according to one of Claims 1 to 4, **characterized in that** the intermediate flange (12) is at least partially integrated in a housing (24) of the hand machine tool (10).

7. Hand machine tool according to one of the preceding claims, **characterized in that** the intermediate flange (12) at least partially consists of two half shells.

8. Hand machine tool according to one of the preceding claims, **characterized in that** the main body (14) is sleeve-shaped.

9. Hand machine tool according to Claim 8, **characterized in that** the intermediate flange comprises a second sleeve-shaped main body (48) and a third, disc-shaped main body (50) with a sleeve-shaped extension (52) integrally formed thereon, wherein the two sleeve-shaped main bodies (14, 48) are connected at the first ends (54, 56) thereof to the third main body.

10. Hand machine tool according to one of the preceding claims, **characterized in that** the hand machine tool is a hammer drill (10).

11. Assembly method for a hand machine tool which has an intermediate flange (12) having at least one main body (14) with a slot-shaped opening (16) running in a bearing point (18) and in a bearing (20), an intermediate shaft assembly (32) with an intermediate shaft (34) and a wobble bearing (38) having a wobble finger (40), and a driving piston (42), **characterized in that**, in a first step, the driving piston (42) is placed onto the wobble finger (40) and, in a second step, is introduced together with the intermediate shaft assembly (32) into the opening (16), wherein an assembly direction corresponds to a direction of a main-body longitudinal axis (58) of the main body (14) before, subsequently, in a third step, the intermediate shaft (34) is plugged into a second main body (48) of the intermediate flange (12).

## Revendications

1. Machine-outil portative (10) comprenant une bride intermédiaire (12), en particulier pour recevoir des éléments de transmission, qui présente au moins un corps de base (14) avec au moins un point de palier (18), **caractérisée en ce qu'**au moins une ouverture en forme de fente (16) est disposée au moins dans la région du point de palier (18).

2. Machine-outil portative selon la revendication 1, **caractérisée par** un palier (20) qui est reçu dans le point de palier (18) et qui est ouvert au moins dans la région de l'ouverture (16).

3. Machine-outil portative selon la revendication 2, **caractérisée en ce que** le palier (20) est fixé contre toute rotation dans le point de palier (18) au moyen d'au moins un dispositif.

4. Machine-outil portative selon la revendication 2 ou 3, **caractérisée en ce que** le palier (20) est fixé contre tout déplacement axial dans le point de palier (18) au moyen d'au moins un dispositif (22).

5. Machine-outil portative selon l'une quelconque des revendications précédentes, **caractérisée en ce que** la bride intermédiaire (12) est réalisée sous forme de composant séparé.

6. Machine-outil portative selon l'une quelconque des revendications 1 à 4, **caractérisée en ce que** la bride intermédiaire (12) est intégrée au moins en partie dans un boîtier (24) de la machine-outil portative (10).

7. Machine-outil portative selon l'une quelconque des revendications précédentes, **caractérisée en ce que** la bride intermédiaire (12) se compose au moins en partie de deux demi-coques.

8. Machine-outil portative selon l'une quelconque des revendications précédentes, **caractérisée en ce que** le corps de base (14) est en forme de douille.

9. Machine-outil portative selon la revendication 8, **caractérisée en ce que** la bride intermédiaire comprend un deuxième corps de base en forme de douille (48) et un troisième corps de base en forme de disque (50) avec une partie saillante (52) façonnée en forme de douille, les deux corps de base en forme de douille (14, 48) étant raccordés au troisième corps de base au niveau de leurs premières extrémités (54, 56).

10. Machine-outil portative selon l'une quelconque des revendications précédentes, **caractérisée en ce que** la machine-outil portative est un marteau perforateur (10).

11. Procédé de montage d'une machine-outil portative qui présente une bride intermédiaire (12) présentant au moins un corps de base (14) avec une ouverture (16) en forme de fente s'étendant dans un point de palier (18) et dans un palier (20), un module d'arbre intermédiaire (32) avec un arbre intermédiaire (34) et un palier oscillant (38) présentant un doigt oscillant (40) ainsi qu'un piston d'entraînement (42), **caractérisé en ce que** dans une première étape, le piston d'entraînement (42) est enfiché sur le doigt oscillant (40) et, dans une deuxième étape, conjointement avec le module d'arbre intermédiaire (32), est introduit dans l'ouverture (16), une direction de montage correspondant à une direction d'un axe longitudinal de corps de base (58) du corps de base (14), avant qu'ensuite, dans une troisième étape, l'arbre intermédiaire (34) ne soit enfiché dans un deuxième corps de base (48) de la bride intermédiaire (12).
